# EUROPEAN PATENT SPECIFICATION

(11) **EP 0 279 558 B1**
(45) Date of publication and mention of the grant of the patent: **28.07.1993**
(21) Application number: 88300902.9
(22) Date of filing: 03.02.1988
(51) Int. Cl.: G09B 5/14

(54) **System of data working stations for teaching a class of students**
System von Datenverarbeitungsstationen für den Unterricht in Schulklassen
Système de stations de traitement de données pour l'enseignement d'une classe d'étudiants

(30) Priority: 12.02.1987 IT 6709187
(43) Date of publication of application: 24.08.1988
(73) Proprietor: Ing. C. Olivetti & C., S.p.A., 10015 Ivrea (IT)
(72) Inventor: Bianco, Luigi, I-10015 Ivrea (Turin) (IT); Gazzano, Gloria, I-20100 Milan (IT); Pimpinelli, Francesco, I-20100 Milan (IT)
(74) Representative: Pears, David Ashley

(56) References cited:
- DE-A- 2 853 673
- FR-A- 2 437 660
- US-A- 3 423 532
- US-A- 4 538 993
- US-A- 4 715 818

## Description

This invention relates to a system of data working stations for teaching use in a class of students, one of the type defined in the preamble of claim 1.

In known systems of the above-indicated type, individual student working stations can selectively enter into a dialogue with another of the working stations including the teaching station. Even in the case where commands issued from the teacher or master working station have priority over those issued from the student working stations, the known systems suffer from a severe limitation regarding the collective interchange of information between teacher and student.

US-A-4,538,993 discloses a computerised teaching system in which a teacher computer and a plurality of student computers are interconnected by a teacher switching console. Switches of the console may be actuated to connect the teacher console to selected ones of the student computers or to all the student computers.

The present invention aims to provide a system of working stations which improves student participation in the lessons.

The aim of the invention is achieved by the working system defined in Claim 1.

A system embodying the invention has the advantage that it can continuously update an image produced by one working station of the display to another working station. The updating of an image of a remote display occurs after modifications have been defined with repsect to the previous image, whereby the tramsmission time is reduced to a minimum.

Am embodiment of the invention will now be described by way of example and with reference to the accompanying drawings, wherein:
Figure 1 is a diagrammatic view of a system of working stations according to the invention;
Figure 2 is a block circuit diagram of one of the working stations in Figure 1;
Figure 3 is a block circuit diagram of a remote video control;
Figure 4 is a block circuit diagram of the unit for interfacing a working station with the network;
Figure 5 is a diagrammatic view of the keyboard of each working station;
Figure 6 is a diagrammatic view of the structure of the programs in the working stations, and
Figures 7 to 11 are flow charts illustrating operation of the system.

### DESCRIPTION OF THE SYSTEM

The teaching system is suitable for collective teaching in a class of students, for example 23 students, who may be in a single location or who may be positioned individually or in groups at various locations. The teacher in turn may for various reasons be at a location which is different from that of the students and possibly even at a substantial distance so that the system provides for teleteaching.

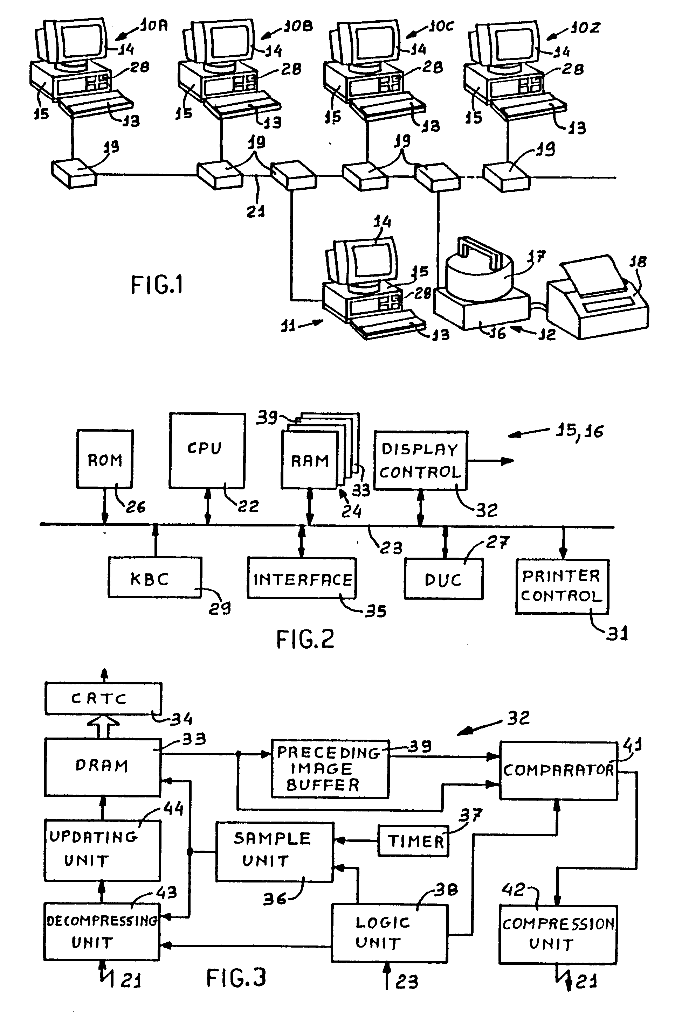

In particular, with reference to Figure 1, the system comprises a data working station for each student, that is to say stations 10, 10A, 10B, 10C...10Z, and a data working station 11 for the teacher. The system further comprises a service computer, generally indicated at 12, which will be referred to hereinafter as the 'server'. Each working station comprises a keyboard 13 for the input of data and commands, a page monitor or video display 14 and a processing unit 15. The server 12 essentially comprises a processing unit 16 which is substantially the same as the processing unit 15 of the working stations 10 and 11, a high-capacity mass memory which is formed for example by a hard magnetic disc unit 17 and a printer 18, for example for continuous modules.

The working stations 10, 11 and the server 12 may be connected by way of corresponding connecting boxes 19 to a local area data transmission network comprising a cable 21 on which the various boxes 19 are disposed. The local area network may be for example of the contention type, based on any one of the known transmission protocols.

By way of example, the working stations 10, 11 and the server 12 may each be essentially formed by a per se known personal computer. The processing unit 15, 16 thus essentially comprises a central processing unit (CPU) 22 which is connected by way of a bus 23 for commands, data and addresses to a random access memory (RAM) 24 and a read only memory (ROM) 26. Also connected to the bus 23 is a control unit 27 (DUC) for a device 28 for reading and writing on a magnetic disk which can be of floppy disk type for the processing units 15 and forms a high-capacity memory for each working station 10, 11 or may be of the hard disk type for the processing unit 16 and forms a mass memory for the server 12.

A control unit 29 (KBC) for a keyboard and/or a control unit 31 for a printer and/or a control unit 32 for the monitor may also be selectively connected to the bus 23. The control 32 is of the type which is capable of providing pilot control for the video display 14 (see Figure 1), for example of the cathode ray tube type, and can receive commands and information from another working station 10, 11, as will be seen in greater detail hereinafter, whereby it forms a remote video control.

The control 32 (see Figure 2) is capable of causing the display of both alpha-numeric images and graphic images. For that purpose a portion 33 of the RAM 24 is used for refreshing the image on the monitor and will be referred to hereinafter as the DRAM. The control 32 is capable of controlling a display of 25 rows by 80 columns of characters in accordance with a high-definition matrix of 16 x 8 dots. The control 32 is also capable of controlling display of graphic images with a high level of definition of 640 x 400 dots which are recorded in a pixel map, whereby a DRAM 33 of a capacity of 32 Kb is required.

In particular the control 32 comprises a unit (CRTC) 34 (see Figure 3) for controlling the video display 14, which is capable of generating the necessary synchronisations for scanning of the pixels and for providing a for control of the cursor. The unit 34 also transfers to the video display 14 the signals which are generated by the DRAM 33. The unit 32 also comprises a sampling unit 36 which is timed by a timer 37 and is controlled by a logic unit 38 connected to the bus 23 for sampling the image defined by the DRAM 33 at a frequency of five times per second and for transferring it into a second zone 39 of the memory 24, of the same capacity as the DRAM 33, for storing the information of the image which has just been displayed, whereby it will be transferred to hereinafter as the preceding image buffer.

The logic unit 38 is also capable of controlling a comparator 41 which provides for byte-by-byte comparison of the information in respect of the preceding image present in the buffer 39, with that of the new image sampled. The comparator 41 therefore outputs, in a suitably delayed fashion, the signals relating just to the modifications to the image. Those signals relating to the image modifications are then compressed by a compression unit 42 whose output can thus be transmitted on the line 21 with a substantial signal reduction, as will be seen in greater detail hereinafter.

The control 32 also comprises a decompression unit 43 which is operable to decompress the information received from the line 21 to output the information in respect of just the modifications to the image existing in the DRAM 33. Those modifications which are sampled by the unit 36 are introduced into the DRAM 33 under the control of an image updating unit 44 whereby the image is displayed on the receiver video display 14, with such updating.

It will be clear therefore that the system makes it possible continuously to update an image produced by a working station 10, 11 on the video display 14 of another working station. It will also be clear that the updating of an image on a remote video display occurs after having defined the modifications with respect to the preceding image whereby the time required for transmission is reduced to a minimum.

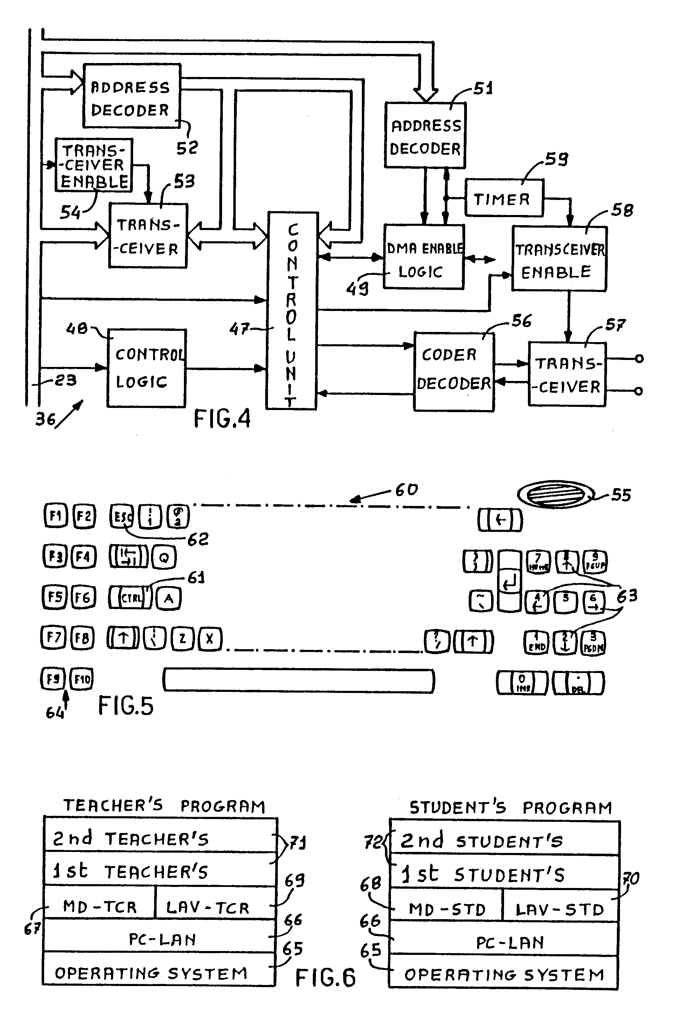

Connected to the bus 23 (see Figure 2) of each processing unit 15 and 16 is an interface 35 for connection of the unit 15, 16 to the box 19, which controls the transmission of messages to the network 21 and the reception of messages from the network, to permit sharing of the resources of the server 12 and direct communications between pupils and teacher of the contention type CSMA/CD (Carrier Sense Multiple Access/Collision Detection type). In particular the interface 35 (see Figure 4) comprises a data transfer control 47 which by way of example may be of the type which is capable of implementing the transmission protocol known as ETHERNET (trade mark of Xerox Corporation).

The control unit 47, by way of a control logic 48 and the bus 23, co-operates with the interrupt logic of the CPU 22 and, by way of an enable logic 49 controlled by an address decoder 51 co-operates with a direct memory access unit DMA for direct access to the RAM 24 (ss Figure 2). In that way part of the RAM 24 is assigned as a dynamic transmission or reception buffer. The control unit 47 (see Figure 4) is provided with a series of registers for data, addresses, status conditions and commands. Another register also defines the address of the station 10, 11 or the server 12 (Figure 1). In particular those registers are addressed by a second address decoder 52 (see Figure 4) and interchange data with the bus 23 by way of a transceiver 52 enabled for reading or writing by an enable circuit 54.

The control unit 47 effects series/parallel conversion of the interchanged messages and is also capable of generating and removing the preamble of the interchanged messages and managing collisions of messages on the network 21. Those messages pass by way of a coder-decoder 56 which is connected to the box 19 by way of a differential transceiver 57 controlled by an enable logic 58. A timer logic 59 times the logic unit 49 and the logic unit 58.

Normally the control unit 47 is predisposed for reception from the line. When, by way of the transceiver 57 and the coder/decoder 56, the control unit 47 receives the preamble of a new message together with its address, it predisposes the logic unit 49 for transfer of the message in DMA to the RAM 24 (see Figure 2) whereby the working station 10, 11 or the server 12 can receive and store the entire message. When the CPU 22 sends by way of the logic unit 48 (see Figure 4) a transmission command followed by the address of the destination station, the control unit 47 controls the logic unit 58 in such a way as to predispose the transceiver 57 for the transmission and the logic unit 49 in such a way as to read the message in the RAM 24 to DMA. The message is then formatted by the control unit 47, coded by the coder/decoder 56 and sent by way of the box 19 on the network 21.

The keyboard 13 of the stations 10 and 11 comprises the usual area 60 (see Figure 5) of alpha-numeric keys, a key 61 for predisposition of the controls (CTRL) a control key 62 ECS which will be seen in greater detail hereinafter, four keys 63 for controlling the cursor of the video display 14 and a group 64 of function keys F1-F10, the commands of which are defined from time to time by the program. The codes emitted by the usual encoder of the keyboard 14 are sent to the unit KBC 29 (see Figure 2) which comprises a transcoder, a keyboard buffer and an interrupt request logic for sending the data imposed on the bus 23.

For operation of the system each station 10 and 11 is provided with a magnetic disk (floppy disk) on which the associated programs are recorded. They comprise an operating system module 65 (see Figure 6), for example the standard operating system in the art, which is known as MS-DOS from Microsoft, and a local area network transmission module 66 which will be referred to hereinafter as PC-LAN. The program relating to the teacher station 11 also comprises a teaching monitor module 67 (MD-TCR, for control of the associated video display 14, while the program relating to the student stations 10 comprises another teaching monitor module 88 MD-STD for control of the respective video display 14. The two teaching monitor modules 67 and 68 provide an assembly of functions, by means of which the teacher can interact with the students and monitor and control their individual activity.

The program relating to the teacher working station 11 also comprises an electronic blackboard module 69 LAV-TCR while the program relating to each student working station 10 comprises a second electronic blackboard module 70 LAV-STD. The two electronic blackboard modules 69 and 70 provide another assembly of functions, by means of which the teacher can control the individual checks on the students and collective class exercises, in a similar fashion to what normally takes place in traditional teaching by means of the class blackboard.

The programs of each working station 10 and 11 further comprise application program modules 71 for the student and 72 for the teacher, for dealing with the specific content of the teaching course. Finally the server 12 will be provided with a magnetic program disk for a server station, which is known per se.

### TEACHING MONITOR

### Teacher interface

The module MD-TCR is transferred on to the RAM 24 of the station 11 (see Figure 1) during initialisation thereof and can be requested by means of the keyboard 13 of the station 11 after the initialisation operation. It comprises a file which contains the user list formed by the name of the teacher followed by the names of the students in the class. In addition the module MC-TCR comprises the commands which are enabled for the station 11 and a file for handling the archive of the video images in the hard disk unit 17 of the server 12.

All the functions of the teaching module are available only on the module MD-TCR whereby only the teacher can perform the active part of beginning any activity which more or less involves the students, by actuating the keys F1-F10 (see Figure 5) of the associated keyboard 13. In particular, when it is requested, the module MD-TCR conditions the video display 14 of the teacher to display the main menu, that is to say the list of functions controlled by each key F1-F10 of the keyboard. The functions available to the teacher are as follows: F1 Help
F2 Check student activity
F3 Handle image archive
F4 Send message to the class
F5 Return to the MS-DOS system for off-line operations
F6 Deactivation of the module MD-TCR.

At any time the teacher, by depressing the key F1, causes the video display 14 to display the list of functions. By depressing immediately afterwards one of the keys indicated in the list, he causes the detailed description of each function to be displayed. In order to interrupt the help function, it is only necessary in each case to depress the ESC key 62 which causes immediate return to the current working situation.

The individual functions of the teaching monitor will now be described.

### Checking student activity

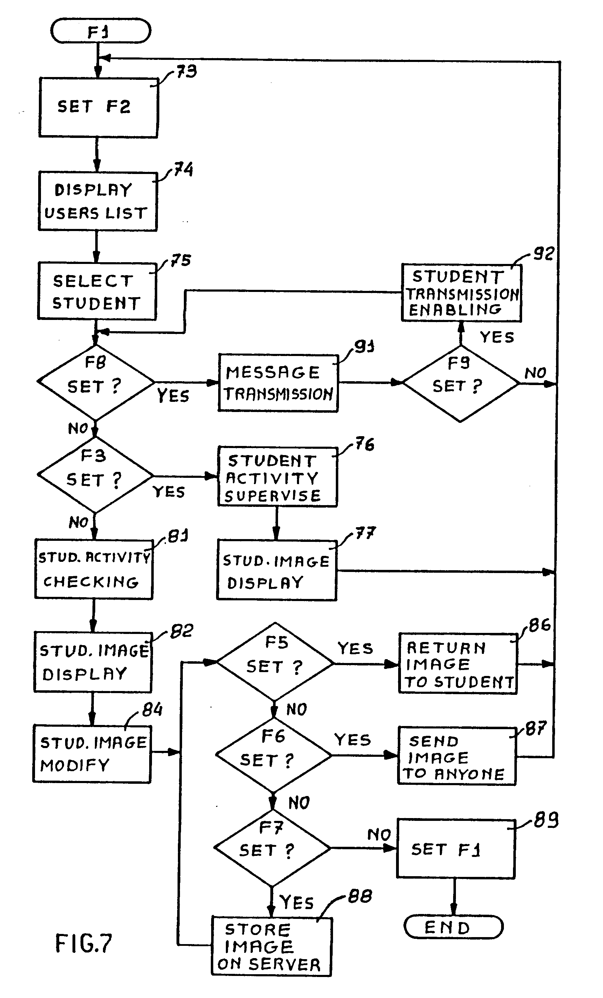

If from the main menu the teacher depresses the key F2 (see also Figure 5), the function of checking activity of the students (operation 73 in Figure 7) is begun. The module MD-TCR then causes the tutor video display 14 to display the list of the names of students (operation 74). The students who are present, that is to say who are active in the teaching monitor module, are identified by a number which represents for example the respective ordinal number of the name in alphabetical order. The list of such numbers and thus the list of the students present in compiled in a manner which will be described hereinafter. In that way the teacher has available on the video display 14 the list of students present at the time at which he wishes to check student activity.

To begin, the teacher selects the student to be checked, by specifying the number relating to the student (operation 75) which causes the working station 10 of the student to be selected. Initial actuation of the key F2 causes the key F3 to take on the function of controlling the change in checking modality within the function of checking the activity of the students. In particular, depression of the key F3 provides for predisposition of supervision of the activity of the students without the students being aware thereof (operation 76). The video display 14 of the teacher station 11 now receives by way of the line 21 the image of the video display 14 at the station 10 of the student (operation 77), the activity of which is not blocked. However the keyboard 13 of the teacher is blocked, who under those conditions cannot introduce modifications or comments into the image at the video display 14 of the student.

If however the key F3 has not been depressed or if after that key is depressed the key F2 is depressed again, which nullifies the predisposition of the key F3, that predisposes for checking of the activity of the student, with a block on the activity of the student (operation 81). The image of the video display 14 of the selected student is now transmitted automatically by way of the line 21 to the video display 14 of the teacher (operation 82). The teacher can now modify the image received, by writing comments by means of the keyboard 60 (see Figure 5) or by setting out modifications, which are positioned by means of the keys 63 for the cursor (operation 84 in Figure 7).

By now depressing the key F5, the teacher can send the modified image back to the student station 10 (operation 86) while in order to unblock the activity of the student, the key F2 has to be depressed again, which causes the list of students to re-appear on the video display 14 of the teacher (operation 73). The teacher can also send the modified image of the student to all the other students by depressing the key F6 whereby the stations of all the students are subjected to a temporary block (operations 87) which can be removed by depressing the key F2 again.

Following an operation of checking the video display of the student with a block on the activity thereof, which is effected by means of the key F2, the teacher can put into store the image which is transferred on to his video display in the server station 12. In that case the teacher depresses the key F7 which causes the appearance on an area of his video display of a message inviting him to give the image to be put into store a name which is formed by a predetermined number of characters (operation 88). After that operation the teacher sends the stored image to the video display of the pupil (operation 86), as in the former case. Return to the main menu is effected in each case by depressing the key F1 (operation 89).

### Conversation with the student

If, after having depressed the key F2 and after having selected the station 10 of a student (operation 75), the teacher depresses the key F8, the teacher begins a conversation with the student. The key F8 then puts the working station 11 of the teacher in the transmission mode while the student working station 10 is in a receiving mode. The teacher now composes on his keyboard 13 the message which is to be transmitted and which is sent line by line to the selected student, following the carriage return command (operation 91).

To go to the receiving state, the teacher depresses the key F9, putting the student working station 10 into a transmission mode. That station can now transmit his message in reply to the teacher (operation 92) by using the same methods of transmission as the teacher. The conversation is terminated on the initiative of the teacher when the latter sets the key F2 whereby the program returns to the operation 74.

### Handling image archive

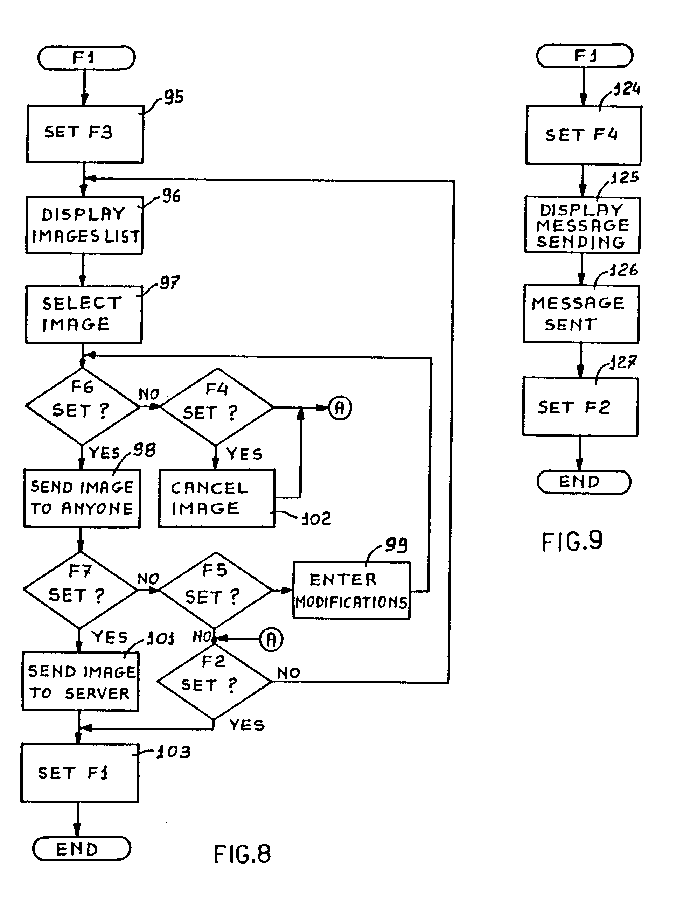

If from the main menu the teacher depresses the key F3 (image 95 in Figure 8), that begins the function of handling the archive of images taken from the activity of the students or produced from the stations 11 and already put into archive store in the disc unit 17 (Figure 1) of the server 12. The module MC-TCR then causes the teacher display unit 14 to display the list of names of the archive images (operation 96 in Figure 8).

The teacher, by means of the keyboard 60, now sets the name of the image that he wishes to select and which is now displayed on his video display (operation 97).

The teacher can now send the image to all the students by depressing the key F6 (operation 98). Subsequently the teacher, by depressing the key F5, can add to the extracted image other modifications which are applied by means of the keyboard 60 (operation 99) and can send them progressively to the students by depressing the same key F6. Transfer to the server 12 of the modified image is controlled by setting the name of the new image and depressing the key F7 which results in a operation 101 which is similar to the operation 88 in Figure 7.

Alternatively, after having selected the image from the archive store, the teacher can cancel it be depressing the key F4 (operation 102). Return to the list of images is effected in each case by depressing the key F2 while to go to the main menu it is only necessary to depress the key F1 (operation 103).

### Sending a message to the class

If from the main menu the teacher depresses the key F4 (operation 124 in Figure 9), the function of sending a message to all the students present in the class is enabled. The module MC-TCR then provides for the display of a notice indicative of the enabled function (operation 125). The teacher can now set a message by means of the keyboard 60. By depressing the key F6, the message is sent through the network 21 to the video display 14 of all the students present, to replace the image displayed thereat (operation 126). When then the key F2 is depressed, the video display of the students has the previous image restored (operation 127) whereby the students can resume their interrupted activity while the video display 14 of the teacher goes to the main menu.

### Student interface

The module MD-STD comprises the functions available from time to time to the student working stations 10 in accordance with the status of the teaching monitor.

The student can execute any application module but is subject to the control actions on the part of the teacher. The student cannot initiate any interaction activity with the other students and can interact with the teacher only on the initiative of the latter. The student however can control his identification in the teaching monitor module and call for the attention of the teacher.

In particular the module MD-STD comprises a parameter formed by his own name. After the student working stations 10 have been initialised and the RAM 24 of the module MD-STD has been called up, initialisation of the teacher working station 11 with the module MD-TCR comprises automatic identification of the students present in the user list of the MD-TCR whereby the teacher video display 14 shows the appropriate ordinal number next to the name of the student.

In case the name parameter has not yet been introduced into the MD-TCR, after initialisation thereof, the video display 14 of the student indicates that condition. The student then composes his name on his own keyboard, thus putting the module MD-TCR into a condition for registering his presence.

The student present in the module MD-TCR can escape from the teaching monitor module by pressing the key F4 of his own keyboard 13. In that case he is deemed to be absent and he can perform modules of programs which do not require the teaching monitor. To return to the teaching monitor application, it is only necessary for the student to depress the key F2 of his keyboard 13.

### Requesting teacher attention

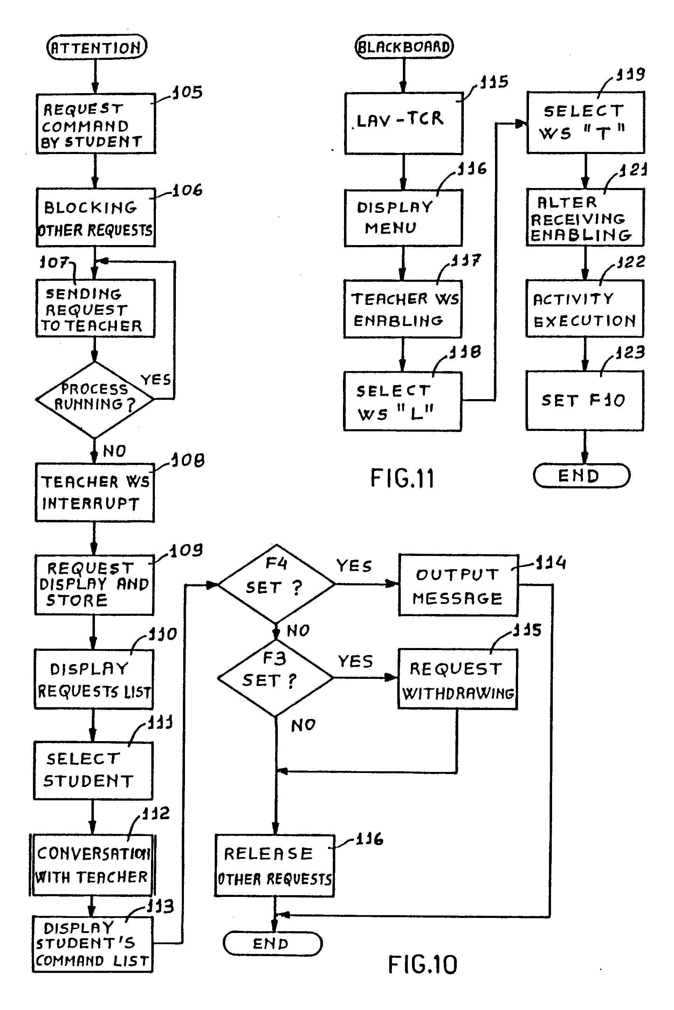

The module MD-STD comprises the function of calling for the attention of the teacher, on the part of a student. That function is performed when a student simultaneously presses the two keys 63 (see Figure 5) on his keyboard, for moving the cursor to the right and to the left (operation 105 in Figure 10). The working station 10 which has requested attention is then automatically disabled from again requesting the attention of the teacher (operation 106) until the teacher has replied to the first request for attention, as will be described in greater detail hereinafter.

The working station 10 of the student who has thus requested attention then transmits a series of attention request signals to the teacher working station 11 (operation 107). That transmission is capable of interrupting any processing operations being performed in the teacher working station 11 (operation 108). If the teacher working station 11 is performing a working operation which cannot be interrupted, for example working with an image on the video display 14 at that station or conversation with another student, acceptance of the request for attention is delayed until that working operation has been concluded.

The series of signals transmitted for the request for attention comprises an alpha-numeric message which is displayed on the video display 14 with the indication of the name of the person requesting attention and possibly an acoustic signal at a buzzer 55 (see Figure 5) disposed on the keyboard 13 for calling for the attention of the teacher in any case. The message on the teacher video display 14 is displayed only for a limited period of time. However the indication of the name of the person requesting attention is registered in the list of students (operation 99). The teacher working station 11 can thus receive sequentially or simultaneously a request for attention on the part of various students. In turn the teacher can take a look at any time at the requests for attention by depressing the key F2 of his own keyboard 13 which, as described hereinbefore, causes display of the complete list of students showing those present. The indication of the names of students who have requested attention then displays the names of such students intermittently (operation 110).

The teacher now selects the name of the student to whose request for attention he intends to respond. For that purpose the teacher makes up the ordinal number of that student on his own keyboard 13 and depresses the key 63 (see figure 5) for moving the cursor to the left (operation 111). The teacher can then initiate a conversation procedure with the student or a procedure for transferring the image on the student display with blocking of the associated activity, in a similar manner to that described hereinbefore with reference to Figure 7 (routine 112 in Figure 10).

The conversation or transfer procedure is brought to an end by the teacher by an operation similar to the operation in Figure 7, the display 14 of the working station 10 of the selected student being caused to display the list of operations which are still permitted to the student in that phase and the keys by means of which they are controlled (operation 113).

The list comprises the following commands:
F3 = cancel request
F4 = escape
F2 = return to the application.

In particular, as described hereinbefore, the key F4 of the station 10 is used to transmit to the station 11 the information that the student is absent (operation 114) so that during that period of absence the associated ordinal number is not displayed next to the name of the student on the teacher video display 14. The key F3 however controls an operation 115 for cancelling the request for attention, thus releasing the station 10 for a further future request (operation 116) while the associated program returns to the application module.

### ELECTRONIC BLACKBOARD

### Teacher interface

The module LAV-TCR is the program which permits the teacher to define the setting and the procedures of the electronic blackboard. It is a program module which, after initialisation of the station 11, remains resident in the memory 24 of the station 11 and can be called up at any time by simultaneously pressing the CTRL keys 61 (Figure 5) and the key 63 for moving the cursor towards the left. The activity which is being performed including the activity of the teaching monitor module is then suspended until the activity of the module LAV-TCR is terminated.

The main task of the module LAV-TCR is that of enabling the station 11 to designate a working station 10 or 11 as transmitting the content of its video display 14 to all the other working stations 10 or 11. In that way such content is displayed simultaneously at all the working stations 10 and 11 and the transmitting station assumes the function of an electronic blackboard for the entire class. The transmission is effected by way of the control unit 32 (Figure 3) referred to above, whereby transmission of the image by way of the channel 21 of the network takes place by way of an updating which is scanned at a frequency of 200 times per second.

The LAV-TCR module also has the task of enabling the station 11 to authorise one of the keyboards 13 of the stations 10 to interact with the blackboard video display even if it is at another station 10 or 11. The keyboard 13 of the teacher station 11 always remains enabled whereby it performs the function of the teacher's 'red chalk' on conventional blackboards. For that purpose the teacher keyboard 13 is connected to the system with a higher priority level whereby the messages which are sent on the network from the teacher keyboard reach the layouts in a more timely fashion.

Finally the module LAV-TCR has the task of enabling the teacher station 11 to authorise an individual station 10 to receive images from the blackboard video display.

The module LAV-TCR also comprises the file of the user list which is the same as that of the module MD-TCR.

The module LAV-TCR also comprises the commands which are enabled for the station 11.

When the module LAV-TCR is called up by the teacher (operation 115 in Figure 11), that conditions the video display 14 of the station 11 to display either the list of students with the indication of those present or the list of the functions controlled by each key F1-F10 (operations 16).

The functions now available to the teacher are as follows:
F1 Help
F2 Execution without leaving the menu
F3 Blackboard enable
F4 Keyboard enable
F5 Execution F6 Enable/disable - receiver
F7 Enable to receive for all
F8 Disable to receive for all
F9 Escape from Help
F10 LAV-TCR deactivation.

The help function of the key F1 is similar to that described above in relation to the module MD-TCR. The functions F2-F6 can be commanded upon selection of the working station 10 that the teacher wishes to enable from time to time for the associated function. The other working stations 10 are enabled by entering the associated number on the teacher keyboard 13 or by moving the cursors of the video display 14 to that number in the list of students.

The electronic blackboard operations are initiated with the selection of the working station 10, 11 which is to operate as the blackboard and with activation of a keyboard 13 other than that of the teacher.

At the beginning, the teacher working station 11 is always active as the blackboard, keyboard and receiver; the video display 14 of the teacher working station, beside the name of the teacher, displays an 'L' for enabling as the blackboard, a 'T' as the keyboard and an 'R' as the receiver (operation 117). If the teacher wishes to change the choice of the working station which is to operate as the blackboard, he selects the working station 10 and depresses the key F3. That command disables the previously enabled blackboard function while the teacher video display now displays the 'L' next to the name of the station 10 enabled as the blackboard (operation 118).

To activate the keyboard of the working station 10 which is to interact with the blackboard, the teacher, after having selected the associated working station 10, depresses the key F4. The associated keyboard 13 now remains activated in parallel relationship with that of the teacher while any other keyboard 13 which has been previously activated is deactivated. A 'T' is now displayed on the teacher video display 14 beside the name of the working station 10 of the activated keyboard 13 (operation 119).

The teacher can also activate or deactive any working stations 10 and 11 as a receiver, by selecting the working station and depressing the key F6. Such enabling causes an 'R' to be displayed next to the name of the selected station. If the key F6 is depressed after a working station 10, 11 which has already been enabled as the receiver has been selected, the key F6 produces disabling thereof. In that way it is possible for one or more working stations, including the teacher station, to be individually enabled and disabled.

It will be clear therefore that the teacher working station 11 can be excluded from receiving the transmitted data. It will be appreciated that if the teacher working station 11 is excluded as a receiver, the associated keyboard 13 also remains excluded from the blackboard, insofar as intervention on the part of the teacher in such a situation would be without any significance. That exclusion ensures that accidental actuation of the teacher keyboard 13 does not disturb the exercise on the electronic blackboard. The indication 'L', 'T' and 'R' displayed on the teacher video display 14 next to the names of the stations 10 and 11 which are selected from time to time permit the teacher in any case to remain informed about the electronic blackboard activity.

Finally, by depressing the key F7, it is possible to command enabling of all the working stations 10 as receivers. Similarly, by depressing the key F8, it is possible to command disabling of all the working stations 10. The two keys F7 and F8 therefore do not have any effect on the teacher working station 11. The array of operations of the keys F6, F7 and F8 are indicated by the block 121 in Figure 11.

The key F2 serves to carry out operations on the electronic blackboard, for example the insertion of data and comments which are entered on the keyboard 60 (Figure 5). The key F5 however serves to carry out operations outside the blackboard setting whereby it permits the teacher to perform applications while the students continue the exercise on the blackboard. The array of operations controlled by the keys F2 and F5 is indicated by the block 122 in Figure 11. Finally deactivation of the module LAV-TCR is commanded by depressing the key F10 (operation 123).

### Student interface

The module LAV-STD comprises the functions available to the student working stations 10 when the module is requested or installed. For such installation, the student enters on the keys 60 of his own keyboard 13 the command LAV-STD possibly followed by the name of the student. In that way the working station 10 signals to the teacher that installation has occurred and the video display 14 of the teacher displays the ordinal number next to the name of the student.

After that installation operation the working station 10 of the student remains enabled as a receiver while the keyboard is disabled and any execution of application modules is blocked. It is the task of the teacher to modify the status of the student working stations 10.

Enabling and disabling of the keyboard 13 of a student causes the buzzer 55 to produce a different acoustic signal in the two situations whereby the associated condition is signalled to the student.

It will be appreciated that the above-described system may be the subject of various modifications, improvements and addition of parts and functions without departing from the scope of the invention. For example the local area network may be of the star type with a single box to which all the working stations are connected, like the local area network produced by American Telephone and Telegraph and known as Starlan. In addition the command keys which are enabled by each program module may be varied or arranged differently for satisfying various teaching requirements and methodologies.

## Claims

1. A system of data working stations for teaching use in a class of students comprising a working station (10) for each student and a working station (11) for the teacher, said working stations being connected to a local area data transmission network (21), each of said working stations comprising a display unit (14) for displaying characters and graphic images, a processing unit (15, 16), a keyboard (13) having a plurality of programmable function keys and a plurality of control and data input keys for inputting information to the processing unit, and a program unit (24) having a plurality of program routines, the processing unit being responsive to actuation of a predetermined function key for activating one of said program routines, characterised in that one of the function keys is operable to activate an electronic blackboard routine (LAV-TCR) for selectively enabling the display unit (14) of one of the working stations (10, 11) to function as an electronic blackboard to display an image produced in response to data inputted on the keyboard (13) of any of the working stations (10, 11), and in that each working station comprises a video control unit (32) for transmitting the image of the display unit of the electronic blackboard on the local network (21) to the display units of the other working stations, the video control unit comprising a buffer (39) for storing the last transmitted image and a comparator (41) for comparing the signals of the stored image with the signals of an image entered by any keyboard (13) and restricting transmission to only those signals which have been modified.

2. A system according to Claim 1, characterised in that the video control unit (32) transmits the image at a predetermined frequency and the comparator (41) is controlled by a sampling unit (36) for sampling the image to be transmitted at that frequency.

3. A system according to Claim 2, characterised in that said video control unit (32) comprises an updating unit (44) controllable by said sampling unit (36) to update a preceding image with information received from the network.

4. A system according to Claims 1 to 3, characterised in that said electronic blackboard routine enables the keyboard (13) of one of the student working stations to operate on the working station which enabled as the electronic blackboard to enter modifications in the image displayed on the display of said last named working station and to transmit the updated image to the other displays of the system.

5. A system according to any preceding claim, characterised in that said electronic blackboard routine activates and deactivates one or more of said working stations to receive images displayed on the display unit of the electronic blackboard.

## Patentansprüche

1. System von Datenverarbeitungsstationen zum Lehren der Benutzung in einer Schulklasse mit einer Arbeitsstation (10) für jeden Studenten und einer Arbeitsstation (11) für den Lehrer, wobei die Arbeitsstationen mit einem örtlichen Datenübertragungsnetzwerk (21) verbunden sind, jede der Arbeitsstationen eine Anzeigeeinheit (14) zum Anzeigen von Zeichen und graphischer Bilder, eine Verarbeitungseinheit (15, 16), eine Tastatur (13) mit einer Vielzahl von programmierbaren Funktionstasten und einer Vielzahl von Steuerungs- und Dateneingabetasten zum Eingeben von Informationen in die Verarbeitungseinheit und eine Programmeinheit (24) mit einer Vielzahl von Programmroutinen aufweist und durch die Verarbeitungseinheit in Abhängigkeit von der Betätigung einer vorbestimmten Funktionstaste eine der Programmroutinen aktivierbar ist, **dadurch gekennzeichnet,** daß durch die Betätigung einer der Funktionstasten eine elektronische Schreibtafelroutine (LAV-TCR) derart aktivierbar ist, daß die Anzeigeeinheit (14) einer der Arbeitsstationen (10, 11) selektiv als elektronische Schreibtafel wirksam ist, um ein in Abhängigkeit von an der Tastatur (13) einer der Arbeitsstationen (10, 11) eingegebenen Daten erzeugtes Bild anzuzeigen, und daß jede Arbeitsstation eine Videosteuereinheit (32) zum Übertragen des Bildes der Anzeigeeinheit der elektronischen Schreibtafel über das örtliche Netzwerk (21) zu den Anzeigeeinheiten der anderen Arbeitsstationen aufweist, wobei die Videosteuereinheit einen Zwischenspeicher (39) zum Speichern des zuletzt übertragenen Bildes und einen Vergleicher (41) zum Vergleichen der Signale des gespeicherten Bildes mit den Signalen eines an einer Tastatur (13) eingegebenen Bildes und zum Beschränken der Übertragung allein auf diejenigen Signale, die geändert wurden, aufweist.

2. System nach Anspruch 1,
**dadurch gekennzeichnet,**
daß die Videosteuereinheit (32) das Bild auf einer vorbestimmten Frequenz überträgt und der Vergleicher (41) durch eine Abtasteinheit (36) zur Abtastung des auf dieser Frequenz zu übertragenden Bildes gesteuert wird.

3. System nach Anspruch 2,
**dadurch gekennzeichnet**,
daß die Videosteuereinheit (32) eine Aktualisierungseinheit (44) aufweist, die durch die Abtasteinheit (36) so steuerbar ist, daß sie ein vorhergehendes Bild durch Informationen, die sie von dem Netzwerk erhalten hat, aktualisiert.

4. System nach einem der Ansprüche 1 bis 3,
**dadurch gekennzeichnet,**
daß die elektronische Schreibtafelroutine die Tastatur (13) einer der Studentenarbeitsstationen dahingehend befähigt, daß sie auf die Arbeitsstation einwirkt, welche als elektronische Schreibtafel ermöglichte, Änderungen des Bildes, das auf der Anzeige der zuletzt erwähnten Arbeitsstation angezeigt wird, einzugeben und das aktualisierte Bild zu den anderen Anzeigen des Systems zu übertragen.

5. System nach einem der vorstehenden Ansprüche,
**dadurch gekennzeichnet,**
daß die elektronische Schreibtafelroutine eine oder mehrere der Arbeitsstationen zum Empfangen von Bildern, die auf der Anzeigeeinheit der elektronischen Schreibtafel angezeigt werden, aktiviert und deaktiviert.

## Revendications

1. Un système de stations de travail de données pour l'enseignement d'une classe d'étudiants comprenant une station de travail (10) pour chaque étudiant et une station de travail (11) pour l'enseignant, lesdites stations de travail étant reliées à un réseau local (21) de transmission de données, chacune desdites stations de travail comprenant une unité d'affichage (14) pour afficher des caractères et des images graphiques, une unité de traitement de données (15, 16), un clavier (13) pourvu d'une série de touches de fonctions programmables et d'une série de touches de commande et d'entrée de données pour entrer des données à l'urité de traitement, et une unité de programme (24) pourvue d'une série de sous-programmes, l'unité de traitement étant sensible à l'actionnement d'une touche de fonction prédéterminée pour activer l'un desdits sous-programmes, caractérisé en ce que l'une des touches de fonctions peut être mise en oeuvre pour activer un sous-programme de tableau électronique (LAV-TCR) afin de valider sélectivement l'unité d'affichage (14) de l'une des stations de travail (10,11) pour qu'il fonctionne comme tableau électronique afin d'afficher une image produite en réponse à des données entrées au clavier (13) de l'une quelconque des stations de travail (10, 11) et en ce que chaque station de travail comprend une unité de commande vidéo (32) pour transmettre sur le réseau local (21) l'image de l'unité d'affichage du tableau électronique aux unités d'affichage des autres stations de travail, l'unité de commande vidéo comprenant un tampon (39) de mémorisation de la dernière image transmise et un comparateur (41) pour comparer les signaux de l'image mémorisée et les signaux d'une image entrée par un clavier quelconque (13) et pour restreindre la transmission aux seuls signaux qui ont été modifiés.

2. Un système selon la revendication 1, caractérisé en ce que l'unité de commande vidéo (32) transmet l'image à une fréquence prédéterminée et le comparateur (41) est commandé par une unité d'échantillonnage (36) de manière à échantillonner à cette fréquence l'image à transmettre.

3. Un système selon la revendication 2, caractérisé en ce que ladite unité de commande vidéo (32) comprend une unité de mise à jour (44) qui peut être commandée par ladite unité d'échantillonnage (36) afin de mettre à jour une image précédente au moyen de l'information reçue du réseau.

4. Un système selon l'une des revendications 1 à 3, caractérisé en ce que ledit sous-programme de tableau électronique permet au clavier (13) de l'une des stations de travail d'étudiants d'agir sur la station de travail qui a validé le tableau électronique afin d'entrer des modifications dans l'image affichée sur l'affichage de ladite station de travail nommée en dernier et de transmettre l'image mise à jour aux autres affichages du système.

5. Un système selon une revendication précédente quelconque, caractérisé en ce que ledit sous-programme de tableau électronique active et désactive une ou plusieurs desdites stations de travail pour recevoir des images affichées sur l'unité d'affichage du tableau électronique.
